(19) Europäisches Patentamt / European Patent Office / Office européen des brevets

(11) **EP 3 813 235 B1**

(12) **EUROPEAN PATENT SPECIFICATION**

(45) Date of publication and mention
of the grant of the patent:
**10.04.2024 Bulletin 2024/15**

(21) Application number: **19800899.7**

(22) Date of filing: **01.02.2019**

(51) International Patent Classification (IPC):
$H02K\ 9/06^{(2006.01)}$    $F04D\ 29/28^{(2006.01)}$
$F04D\ 29/44^{(2006.01)}$    $F04D\ 29/70^{(2006.01)}$
$H02K\ 9/26^{(2006.01)}$    $H02K\ 5/20^{(2006.01)}$
$F04D\ 17/06^{(2006.01)}$    $F04D\ 29/58^{(2006.01)}$

(52) Cooperative Patent Classification (CPC):
**H02K 9/06; F04D 17/06; F04D 29/281;
F04D 29/5806; H02K 5/207; H02K 9/26;**
H02K 2213/03; Y02T 10/64

(86) International application number:
**PCT/JP2019/003685**

(87) International publication number:
**WO 2019/215969 (14.11.2019 Gazette 2019/46)**

(54) **ROTARY ELECTRIC MACHINE**

ELEKTRISCHE DREHMASCHINE

MACHINE ÉLECTRIQUE ROTATIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.05.2018 JP 2018091824**

(43) Date of publication of application:
**28.04.2021 Bulletin 2021/17**

(73) Proprietor: **Hitachi Industrial Products, Ltd.
Tokyo 101-0021 (JP)**

(72) Inventors:
• **KUDO Taro
Tokyo 100-8280 (JP)**
• **FUJII Katsuhiko
Tokyo 100-8280 (JP)**
• **TAMURA Tatsuhiro
Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(56) References cited:
EP-A2- 1 137 152    WO-A1-2013/084695
WO-A1-2015/118660    CN-A- 107 681 830
FR-A- 716 885    FR-A1- 2 863 787
GB-A- 1 595 134    JP-A- 2001 190 046
JP-A- 2001 224 150    JP-A- 2001 275 309
JP-A- 2002 359 949    US-A1- 2014 312 723

## Description

Technical Field

The present invention relates to a rotary electric machine, and more particularly to a motor.

Background Art

Examples that disclose cooling structures of rotary electric machines include Japanese Unexamined Patent Application Publication No. 2001-95204 (PTL 1) and International Publication No. WO/WO2015/118660 (PTL 2). PTL 1 describes "a motor including a rotor provided on the inner side of a stator, a fan provided on the rotating shaft of the rotor, and a stator frame that stores the stator, the rotor, and the fan, two axial sides of the stator frame being blocked by brackets, in which the air inlet port for cooling air is provided on the bracket, a first air outlet port for cooling air is provided on the bracket or the stator frame, the second air outlet port for cooling air is provided on the bracket or the stator frame, an annular projection is formed on the inner perimeter of the bracket or the stator frame such that the annular projection is opposed to the outer diameter side of the fan, and the opening of the first air outlet port is disposed between the projection and the bracket" (see Abstract). PTL 2 describes "a totally enclosed main motor including a stator, a rotor core, an iron core clamper, a cooling fan, a rotor, a frame, a bracket, and a bearing part, in which the cooling fan is composed of a main plate that partitions the inside of the totally enclosed main motor from the outside, a plurality of blades provided in the rotation direction of the rotor on the bracket side of the cooling fan, and a guide provided on the bracket side of the blade, the bracket is provided with an air intake port in a region formed by projecting the guide onto the bracket, and the guide is formed such that air taken in from the air intake port is guided" (see Abstract).

PTL 3 discloses a fan in an electric motor integrally rotatable with a rotor which is located on one end in a direction of the axis of the rotor, a bracket for accommodating the fan is joined on one end in the direction of the axis of a stator frame for accommodating a stator, and the bracket is provided with an outside air inlet and a dust emission outlet.

PTL 4 discloses a centrifugal fan electric machine.

PTL 5 discloses a rotor which has a flange parallel to an induced disc and ring gear cooling fins, where each fin extends between a lateral side of the disc and internal lateral side of the flange.

PTL 6 discloses a motor which includes a rotatable shaft, a core secured to the rotatable shaft, a fan secured to the rotatable shaft, and a yoke containing the core and the fan.

Citation List

Patent Literature

PTL 1: Japanese Unexamined Patent Application Publication No. 2001-95204
PTL 2: International Publication No. WO2015/118660 Summary of Invention
PTL 3: US 2014/312723 A1
PTL 4: FR 716 885 A
PTL 5: FR 2 863 787 A1
PLT 6: EP 1 137 152 A2

Technical Problem

The open type motor described in PTL 1 can separate dust with no filter. However, the open type motor is prone to make loud noise due to its structure that takes in cooling air from the fan side.

Noise can be reduced by decreasing the outer diameter of the fan vane. However, this reduces the performance of taking in cooling air, and a reduction in noise has thermal restrictions. The thermal restrictions can be solved by a method of increasing the frame or a method of using low loss materials. However, since the motor has restrictions due to dimensions and costs, it is sometimes difficult to adopt these methods.

The totally enclosed main motor described in PTL 2 does not have a structure that directly delivers cooling air, which is taken in through the fan, to the rotary electric machine (the stator or the rotor), and the totally enclosed main motor fails to introduce cooling air after dust is separated into the stator and the rotor of the rotary electric machine while reducing noise.

Therefore, an object of the present invention is to provide a rotary electric machine that efficiently cools the inside of the rotary electric machine while reducing noise which is produced in taking in cooling air from the fan side.

Solution to Problem

The above cited problem is solved in accordance with the appended claims. In particular, in order to solve the problems, a rotary electric machine according to claim 1 is provided.

Advantageous Effects of Invention

The present invention can provide a rotary electric machine that efficiently cools the inside of the rotary electric machine while reducing noise which is produced in taking in cooling air from the fan side.

Brief Description of Drawings

Figure 1 is a cross sectional view of a rotary electric machine (motor) according to an embodiment of the present invention.
Figure 2 is a perspective view of the appearance of a cooling fan 10 shown in Figure 1.
Figure 3 is a side view of the appearance of the cooling fan 10 shown in Figure 1.
Figure 4 is a view of the appearance of the right side surface of the rotary electric machine shown in Figure 1 viewed from the right direction.

Description of Embodiments

In the following, an embodiment of the present invention will be described with reference to the drawings.

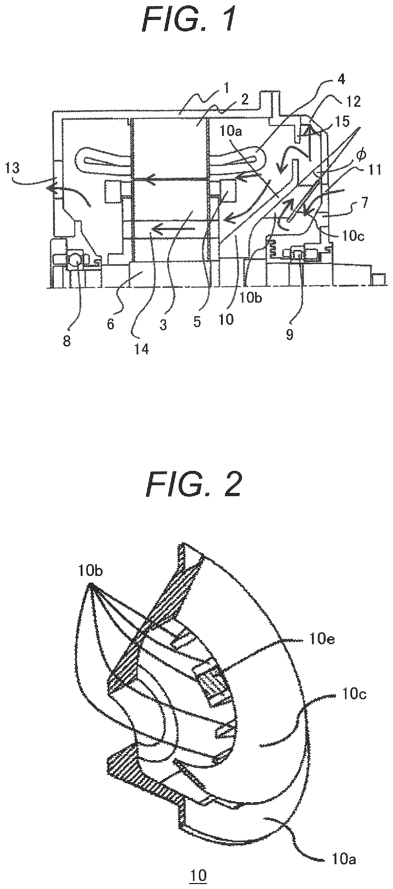

Figure 1 is a cross sectional view of a motor according to an embodiment of the present invention.

The motor includes a stator composed of a stator iron core 2 and a stator winding wire 4, a rotor composed of a rotor iron core 3 and a rotor winding wire 5, and a housing 1 that contains the stator and the rotor. The stator iron core 2 is fixed to the housing 1. On the inner perimeter part of the stator iron core 2, a plurality of slots continuing in the axial direction is formed with predetermined spacings in a circumferential direction, and the stator winding wire 4 is stored on each slot. The rotor iron core 3 is provided on the inner perimeter side of the stator iron core 2 concentrically with the stator iron core 2 through a gap. On the outer perimeter part of the rotor iron core 3, a plurality of slots continuing in the axial direction is formed with predetermined spacings in the circumferential direction, and the rotor winding wire 5 is stored on each slot. On the center axis of the rotor iron core 3, a rotating shaft 6 is provided, and the rotating shaft 6 supports the rotor iron core 3. The rotating shaft 6 is rotatably supported by bearing devices 8 and 9 provided on both end parts of the housing 1.

On one side of the housing 1 (which is the air inlet side of cooling air and is the right side toward the iron core in this drawing), an annular end bracket 7 that is a blocking member is provided, and the annular end bracket 7 fixes and supports the bearing device 9 on the inner perimeter side of the annular end bracket 7. The end bracket 7 is in a shape that is overhung on the opposite side of the iron core between the end part of the housing 1 and the outer perimeter side of the bearing device 9. The housing 1 and the end bracket 7 form a space that contains the stator and the rotor. In this meaning, the end bracket 7 can be regarded as a part of a member that constitutes the housing (in a broad sense) containing the stator and the rotor. In other words, the housing (in a broad sense) is composed of a housing main body (the housing 1 (in a narrow sense)) and the end bracket 7.

In the rotating shaft 6, in a region located between a region provided on the rotor iron core 3 and a region supported by the bearing device 9, a cooling fan 10 is provided. The cooling fan 10 is formed of a disk-shaped main plate 10a, a plate-shaped vane 10b, and a bottomless mortar-shaped side plate 10c.

Here, the configuration of the cooling fan 10 will be described with reference to Figure 2 as well. Figure 2 is a perspective view of the appearance of the cooling fan 10 shown in Figure 1.

The cooling fan 10 is formed of the main plate 10a, a plurality of vanes 10b, and the side plate 10c. A plurality of inlets (inlet cross section) 10e is formed of the main plate 10a, the plurality of vanes 10b, and the side plate 10c.

The main plate 10a is disposed on the rotating shaft 6 such that the space formed by the housing, which houses the stator and the rotor, is partitioned into a first region in which the rotor and the stator are provided and a second region on the opposite side of the first region through the cooling fan 10. The cross sectional form of the main plate 10a along the longitudinal direction of the rotating shaft is inclined so as to approach the inner wall of the housing 1, and the outer edge part of the main plate 10a is formed nearly perpendicularly to the rotating shaft along the inner perimeter surface part of the end bracket 7.

The vane 10b is formed in a plural number between the main plate 10a and the side plate 10c, and a passage is formed by the plurality of vanes 10b, the main plate 10a, and the side plate 10c.

The plurality of vanes 10b is placed so as to extend from the center of the main plate 10a radially in the radial direction. The width of the inner diameter side end part of the adjacent vanes 10b is smaller than the width of the outer diameter side end part.

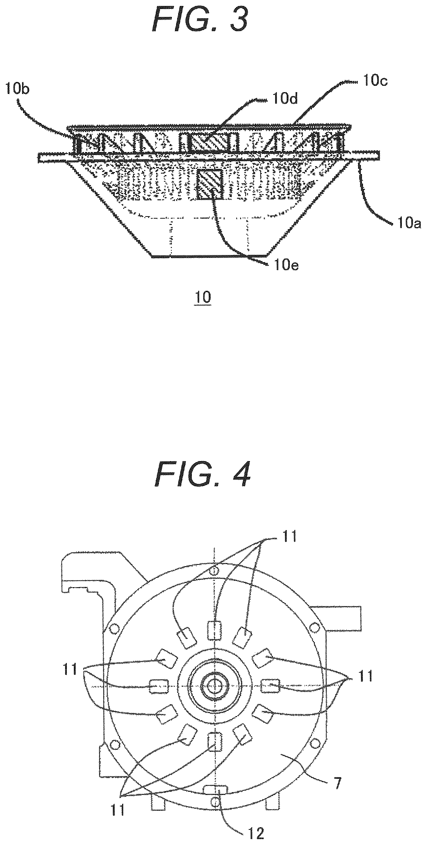

The side plate 10c is provided being connected to the other end of the vane 10b on the opposite side of the main plate 10a, and is formed at the position opposite to an air inlet port 11 formed on the end bracket 7 constituting the housing (in a broad sense). In other words, the end bracket 7 constituting the housing (in a broad sense) is formed with the air inlet port 11 in a region in which the side plate 10c is projected toward the end bracket 7. In the present embodiment, as shown in Figure 4 described later, a plurality of air inlet ports 11 is formed in an annular shape about the rotating shaft 6.

Figure 3 is a cross sectional view of the appearance of the cooling fan 10 shown in Figure 1. The description of the configuration common in Figures 1 and 2 is omitted. Similarly to the inlet 10e, a plurality of outlets 10d is formed by the main plate 10a, the plurality of vanes 10b, and the side plate 10c. In the present embodiment, the difference in the cross sectional areas of the inlet 10e and the outlet 10d is decreased to lessen pressure losses, and thus a structure that can maintain the performance of taking in cooling air is provided. More specifically, the structure is formed such that an angle φ formed by the main plate 10a and the side plate 10c is greater than an angle of zero degree and the spacing between the main plate 10a and the side plate 10c is wider toward the inner diameter side. With the present configuration, the difference in the cross sectional areas of the inlet 10e and the outlet 10d is decreased to lessen pressure losses, and thus a structure that can maintain the performance of taking in cooling air is provided.

Next, the passage of cooling air flowing in the housing 1 will be described. The passage of cooling air is expressed by arrows in Figure 1. First, cooling air taken in from the air inlet port 11 is taken in the axial direction of the rotating shaft 6 along the side plate 10c. Subsequently, the cooling air is guided by the passage formed by the vanes 10b, the main plate 10a, and the side plate 10c, and flows in the direction of a dust outlet port 12, described later. As described above, the cooling air taken in from the air inlet port 11 is first guided to the vanes 10b of the cooling fan, and thus noised can be reduced.

As apparent from the illustrations of Figures 1 to 3, the radial direction end part of the vane 10b of the cooling fan is formed on the inner diameter side from the radial direction end part of the side plate 10c. With the present configuration, a structure is provided in which the passage can be rectified while noise reduction effect is kept maintained. Note that in Figures 1 and 2, a form is shown in which both of the radial direction end parts of the vane 10b of the cooling fan are formed on the inner diameter side from the radial direction end part of the side plate 10c. However, the effect can be exerted as long as at least one radial direction end part of the vane 10b of the cooling fan is formed on the inner diameter side from the radial direction end part of the side plate 10c.

Next, the structure that separates dust from cooling air will be described with reference to Figure 1. On the outer diameter side of the main plate 10a of the cooling fan, a dust separation plate 15 is provided on the end bracket 7. The dust separation plate 15 is a separation mechanism that separates cooling air into cooling air including dust and cooling air including no dust and that avoids the entry of the separated cooling air including dust into the motor. Here, the outer diameter side means the circumferential end part side of the outer shape of the fan formed gradually opening outward. The dust separation plate 15 is a ring-shaped disk having its inner diameter greater than the outer diameter of the main plate 10a of the cooling fan, which is shaped so as to form a projection in the space formed by the housing 1 and the end bracket 7, and the dust separation plate 15 extends so as to guide cooling air introduced into the dust outlet port 12. Note that, the dust separation plate 15 may be integrally formed with the end bracket 7.

Next, a flow of cooling air in separating dust using the dust separation plate 15 will be described with the arrows shown in Figure 1. When the cooling fan 10 rotates with the rotation of the rotating shaft 6, suction force acts on the space between the inner diameter side of the vane 10b and the air inlet port 11, and outside air that is cooling air is sucked from the air inlet port 11.

One stream of the cooling air separated by the dust separation plate 15 includes dust, and the stream flows on the outer perimeter side inner surface of the end bracket 7 in the circumferential direction, reaches the dust outlet port 12 formed on the end bracket 7, and exhausted to the outside of the motor. At this time, the cooling air including dust does not enter the inside of the motor because the dust separation plate 15 makes a wall.

The other stream of the separated cooling air includes no dust, and is pushed to the iron core side through a gap between the inner diameter side of the dust separation plate 15 and the outer diameter side of the main plate 10a of the cooling fan. The pushed cooling air cools one end parts of the stator iron core 2 and the rotor iron core 3, and the steam flows to the exhaust side while cooling the gap between the stator iron core 2 and the rotor iron core 3 and a plurality of ventilation ducts 14 provided on the rotor iron core 3, the plurality of ventilation ducts 14 continuing in the axial direction. The cooling air reached on the exhaust side cools the other end parts of the stator iron core 2 and the rotor iron core 3, and is exhausted from the air outlet port 13 to the outside of the motor.

As described above, according to an embodiment of the present invention, the cooling air pushed by the cooling fan 10 is separated into two steams of cooling air by the dust separation plate 15, i.e., the cooling air including dust and the cooling air including no dust. The cooling air including dust is exhausted from the dust outlet port 12 to the outside of the motor, and the cooling air including no dust is pushed into the inside of the motor through the gap between the inner diameter side of the dust separation plate 15 and the inner diameter side of the main plate 10a of the cooling fan. Thus, the inside of the motor can be cooled by the cooling air including no dust, and the penetration of dust into the inside of the motor and the accumulation of dust due to a long time operation can be suppressed. Accordingly, disassemble and cleaning on a regular basis are unnecessary, and thus maintenance cycles can be extended. The mechanism for removing dust can be formed simpler than conventional ones, and thus failure potential can be reduced, and reliability can be improved.

The ventilation cross sectional area of the gap between the outer diameter side of the main plate 10a of the cooling fan and the inner diameter side of the dust separation plate 15 is made greater than the ventilation cross sectional area of the dust outlet port 12. Thus, the quantity and the wind velocity of the cooling air pushed into the inside of the motor through the gap can be increased, and the air quantity of the cooling air exhausted from the dust outlet port 12 can be made smaller, and the wind velocity can be increased. Accordingly, the cooling air including dust can be reliably exhausted from the dust outlet port 12 having a fast wind velocity, the inside of the motor can be cooled with a large quantity of cooling air, and thus the above-described effect can be improved.

Figure 4 is a view of the appearance of the right side surface of the rotation device shown in Figure 1 viewed from the right direction.

In the present embodiment, the number of the vanes 10b and the number of the air inlet ports 11 are combinations of numbers that are not divided (numbers that do not have any common divisor other than one). With the present configuration, the level of noise produced in the space between the vane 10b and the air inlet port 11 can be reduced. For example, when the number of the air inlet port 11 is 12 and the numbers of the vane are 15 and 17, in the combination of 12 and 15, common divisor 3 is present other than common divisor 1. Thus, in a cycle of 360°, the positions of the vane and the air inlet port are exactly the same at three places at an angle of 120°, noise is boosted to each other, and noise is increased. On the other hand, in the combination of 12 and 17, no common divisor is present other than one. Therefore, the positions of the vane and the air inlet port are all different in a cycle of 360°, noise is not boosted to each other, and thus the level of noise can be reduced.

When the number of the vanes is Nb, the number of the air inlet ports is Ns, the common divisor of the number of the vanes and the number of the air inlet ports is M, and the number of revolutions is rpm, a frequency f of noise to be produced is

$$f = Nb \times rpm \times M/60 \ (Hz)$$

or

$$f = Ns \times rpm \times M/60 \ (Hz).$$

In the combination of 12 and 15, the number of the vanes and the number of the air inlet ports have common divisors 1 and 3, and thus noise having 12-fold, 15-fold, 36-fold, and 45-fold frequencies is produced. On the other hand, in the combination of 12 and 17, the number of the vanes and the number of the air inlet ports have common divisor 1, and thus noise having 12-fold and 17-fold frequencies is produced. Here, in the case in which a certain part constitutes a pipe and the length of this pipe is L, resonant wavelengths at the pipe are 4L, 4L/2, 4L/3, 4 L/4, .... In the combination of 12 and 15 at which there are many frequencies to produce noise, and the pipe easily resonates, and easily increases the level of noise. However, in the combination of 12 and 17 at which there are a few frequencies to produce noise, resonances can be decreased, and thus the level of noise can be reduced. Accordingly, the above-described effect can be further improved.

Reference Signs List

| 1 | housing, |
|---|---|
| 2 | stator iron core, |
| 3 | rotor iron core, |
| 4 | stator winding wire, |
| 5 | rotor winding wire, |
| 6 | rotating shaft, |
| 7 | end bracket, |
| 8, 9 | bearing device, |
| 10 | cooling fan, |
| 10a | main plate, |
| 10b | vane, |
| 10c | side plate, |
| 10d | outlet (outlet cross section), |
| 10e | inlet (inlet cross section), |
| 11 | air inlet port, |
| 12 | dust outlet port, |
| 13 | air outlet port, |
| 14 | ventilation duct, |
| 15 | dust separation plate |

**Claims**

1. A rotary electric machine comprising:

a stator;
a rotor having a rotor iron core (3) disposed on an inner perimeter side of a stator iron core (2) of the stator;
a rotating shaft (6) configured to rotate the rotor iron core (3);
a bearing configured to rotatably support the rotating shaft (6);
a cooling fan (10) provided on the rotating shaft (6);
a housing (1) configured to contain the stator iron core (2) and the rotor iron core (3),
wherein the cooling fan (10) comprises a main plate (10a), vanes provided on a surface of the main plate such that the vanes extend in a radial direction of the rotor iron core (3), the surface being opposite to the housing (1), and a side plate (10c) connected to the vanes, the side plate (10c) being provided such that the side plate (10c) runs straight along an inclined straight part of the main plate (10a) when seen in a longitudinal cross section;
the main plate (10a) is disposed on the rotating shaft (6) such that a space formed by the housing (1) is partitioned into a first region in which the stator and the rotor are provided and a second region on an opposite side of the first region through the cooling fan (10) in which an air inlet port (11) and a dust outlet port (12) are provided, cross sectional form of the main plate along a longitudinal direction of the rotating shaft (6) is inclined so as to approach an inner wall of the housing, and an outer edge part of the main plate (10a) is formed nearly perpendicularly to the rotating shaft (6);

the housing (1) is provided with the air inlet port (11) in a region in which the side plate (11c) is projected in a longitudinal direction of the rotating shaft onto the housing (1); and

an angle $\varphi$ formed by the inclined straigth part of the main plate (10a) and the side plate (10c) is greater than an angle of zero degree, and a spacing between the main plate (10a) and the side plate (10c) is formed such that the spacing is wider toward an inner diameter side.

2. The rotary electric machine according to claim 1, wherein a radial direction end part of the vane (10b) is provided on an inner diameter side from a radial direction end part of the side plate (10c).

3. The rotary electric machine according to claim 1, wherein a width of an inner diameter side end part of the vanes adjacent is smaller than a width of an outer diameter side end part.

4. The rotary electric machine according to any one of claims 1 to 3,
wherein cooling air introduced from the air inlet port (11) by the cooling fan (10) is introduced into a side where the rotor iron core (2) is provided and the cooling air is introduced into the dust outlet port (12) provided on an outer circumferential surface part of the housing (1).

5. The rotary electric machine according to claim 4,

the rotary electric machine is provided with a dust separation plate (15);
wherein the dust separation plate (15) is shaped such that a projection is formed in a space formed by the housing (1); and
the projection extends from the housing inner surface toward the space such that the projection guides the cooling air introduced into the dust outlet port (12).

6. The rotary electric machine according to claim 5, wherein a ventilation cross sectional area of a gap formed by an outer diameter side of the main plate (10a) and an inner diameter side of the dust separation plate (15) is greater than a ventilation cross sectional area of the dust outlet port (12).

7. The rotary electric machine according to any one of claims 1 to 6,
wherein the number of the vanes and the number of the air inlet ports (11) and the vane (10b) are a combination of numbers that are not divided to each other.

**Patentansprüche**

1. Rotierende elektrische Maschine, die Folgendes umfasst:

einen Stator;
einen Rotor, der einen Rotoreisenkern (3) besitzt, der auf einer Innenumfangsseite eines Statoreisenkerns (2) des Stators angeordnet ist;
eine Drehwelle (6), die konfiguriert ist, den Rotoreisenkern (3) zu drehen;
ein Lager, das konfiguriert ist, die Drehwelle (6) drehbar zu lagern;
einen Kühllüfter (10), der an der Drehwelle (6) vorgesehen ist; und
ein Gehäuse (1), das konfiguriert ist, den Statoreisenkern (2) und den Rotoreisenkern (3) zu enthalten, wobei
der Kühllüfter (10) eine Hauptplatte (10a), Schaufeln, die an einer Oberfläche der Hauptplatte derart vorgesehen sind, dass die Schaufeln in einer radialen Richtung des Rotoreisenkerns (3) verlaufen, wobei die Oberfläche dem Gehäuse (1) gegenüberliegt, und eine Seitenplatte (10c), die mit den Schaufeln verbunden ist, umfasst, wobei die Seitenplatte (10c) derart vorgesehen ist, dass die Seitenplatte (10c) in einem Längsschnitt gesehen entlang eines geneigten geraden Teils der Hauptplatte (10a) gerade verläuft;
die Hauptplatte (10a) an der Drehwelle (6) angeordnet ist, derart, dass ein Raum, der durch das Gehäuse (1) gebildet ist, durch den Kühllüfter (10), in dem eine Lufteinlassöffnung (11) und eine Staubauslassöffnung (12) vorgesehen sind, in einen ersten Bereich, in dem der Stator und der Rotor vorgesehen sind, und einen zweiten Bereich auf einer dem ersten Bereich gegenüberliegenden Seite unterteilt ist, eine Querschnittsform der Hauptplatte in einer Längsrichtung der Drehwelle (6) geneigt ist, um sich einer Innenwand des Gehäuses zu nähern, und ein Außenkantenabschnitt der Hauptplatte (10a) nahezu senkrecht zur Drehwelle (6) gebildet ist;
das Gehäuse (1) in einem Bereich, in dem die Seitenplatte (11c) in einer Längsrichtung der Drehwelle auf das Gehäuse (1) vorsteht, mit der Lufteinlassöffnung (11) versehen ist; und
ein Winkel $\varphi$, der durch den geneigten geraden Teil der Hauptplatte (10a) und die Seitenplatte (10c) gebildet ist, größer ist als ein Winkel von null Grad und ein Abstand zwischen der Hauptplatte (10a) und der Seitenplatte (10c) derart gebildet ist, dass der Abstand zu einer Innendurchmesserseite breiter ist.

2. Rotierende elektrische Maschine nach Anspruch 1, wobei
ein Endabschnitt in radialer Richtung der Schaufel (10b) auf einer Innendurchmesserseite von einem Endabschnitt in radialer Richtung der Seitenplatte (10c) vorgesehen ist.

3. Rotierende elektrische Maschine nach Anspruch 1, wobei
eine Breite eines Innendurchmesserseiten-Endabschnitts der benachbarten Schaufeln kleiner als eine Breite eines Außendurchmesserseiten-Endabschnitts ist.

4. Rotierende elektrische Maschine nach einem der Ansprüche 1 bis 3, wobei
Kühlluft, die durch den Kühllüfter (10) aus der Lufteinlassöffnung (11) eingeleitet wird, in eine Seite eingeleitet wird, auf der der Rotoreisenkern (2) vorgesehen ist, und die Kühlluft in die Staubauslassöffnung (12) eingeleitet wird, die an einem Außenumfangsoberflächenabschnitt des Gehäuses (1) vorgesehen ist.

5. Rotierende elektrische Maschine nach Anspruch 4, wobei

die rotierende elektrische Maschine mit einer Staubabscheidungsplatte (15) versehen ist;
die Staubabscheidungsplatte (15) derart geformt ist, dass ein Vorsprung in einem Raum gebildet ist, der durch das Gehäuse (1) gebildet ist; und
der Vorsprung von der Gehäuseinnenoberfläche zum Raum verläuft, derart, dass der Vorsprung die Kühlluft, die in die Staubauslassöffnung (12) eingeleitet wird, führt.

6. Rotierende elektrische Maschine nach Anspruch 5, wobei
eine Belüftungsquerschnittsfläche einer Lücke, die durch eine Außendurchmesserseite der Hauptplatte (10a) und eine Innendurchmesserseite der Staubabscheidungsplatte (15) gebildet ist, größer ist als eine Belüftungsquerschnittsfläche der Staubauslassöffnung (12).

7. Rotierende elektrische Maschine nach einem der Ansprüche 1 bis 6, wobei
die Anzahl der Schaufeln und die Anzahl der Lufteinlassanschlüsse (11) und der Schaufel (10b) eine Kombination von Zahlen sind, die keinen gemeinsamen Teiler haben.

**Revendications**

1. Machine électrique rotative comprenant :

un stator ;
un rotor ayant un noyau en fer de rotor (3) disposé sur un côté périmètre intérieur d'un noyau en fer de stator (2) du stator ;
un arbre rotatif (6) configuré pour mettre en rotation le noyau en fer de rotor (3) ;
un palier configuré pour supporter en rotation l'arbre rotatif (6) ;
un ventilateur de refroidissement (10) prévu sur l'arbre rotatif (6) ;
un boîtier (1) configuré pour contenir le noyau en fer de stator (2) et le noyau en fer de rotor (3), dans laquelle le ventilateur de refroidissement (10) comprend une plaque principale (10a), des ailettes prévues sur une surface de la plaque principale de telle sorte que les ailettes s'étendent dans une direction radiale du noyau en fer de rotor (3), la surface étant opposée au boîtier (1), et une plaque latérale (10c) connectée aux ailettes, la plaque latérale (10c) étant prévue de telle sorte que la plaque latérale (10c) court de manière rectiligne le long d'une partie rectiligne inclinée de la plaque principale (10a) dans une vue en section longitudinale ;
la plaque principale (10a) est disposée sur l'arbre rotatif (6) de telle sorte qu'un espace formé par le boîtier (1) est cloisonné en une première région dans laquelle le stator et le rotor sont prévus et en une seconde région sur un côté opposé de la première région à travers le ventilateur de refroidissement (10) dans laquelle un orifice d'entrée d'air (11) et un orifice de sortie de poussière (12) sont prévus, une forme de section transversale de la plaque principale le long d'une direction longitudinale de l'arbre rotatif (6) est inclinée de manière à se rapprocher d'une paroi intérieure du boîtier, et une partie de bord extérieur de la plaque principale (10a) est formée à proximité et perpendiculairement par rapport à l'arbre rotatif (6) ;
le boîtier (1) est doté de l'orifice d'entrée d'air (11) dans une région dans laquelle la plaque latérale (10c) se projette dans une direction longitudinale de l'arbre rotatif jusque sur le boîtier (1) ; et
un angle φ formé par la partie rectiligne inclinée de la plaque principale (10a) et la plaque latérale (10c) est supérieur à un angle de zéro degré, et un espacement entre la plaque principale (10a) et la plaque latérale (10c) est formé de telle sorte que l'espacement est plus large vers un côté diamètre intérieur.

2. Machine électrique rotative selon la revendication 1,

dans laquelle partie d'extrémité en direction radiale de l'ailette (10b) est prévue sur un côté diamètre intérieur par rapport à une partie d'extrémité en direction radiale de la plaque latérale (10c).

**3.** Machine électrique rotative selon la revendication 1, dans laquelle une largeur d'une partie d'extrémité côté diamètre intérieur des ailettes adjacentes est plus petite qu'une largeur d'une partie d'extrémité côté diamètre extérieur.

**4.** Machine électrique rotative selon l'une quelconque des revendications 1 à 3, dans laquelle un air de refroidissement introduit depuis l'orifice d'entrée d'air (11) par le ventilateur de refroidissement (10) est introduit jusque dans un côté où le noyau en fer de rotor (2) est prévu, et l'air de refroidissement est introduit jusque dans l'orifice de sortie de poussière (12) prévu sur une partie de surface circonférentielle extérieure du boîtier (1).

**5.** Machine électrique rotative selon la revendication 4,

la machine électrique rotative étant dotée d'une plaque de séparation de poussière (15) ; dans laquelle la plaque de séparation de poussière (15) est conformée de telle sorte qu'une projection est formée dans un espace formé par le boîtier (1) ; et la projection s'étend depuis la surface intérieure de boîtier vers l'espace de telle sorte que la projection guide l'air de refroidissement introduit jusque dans l'orifice de sortie de poussière (12).

**6.** Machine électrique rotative selon la revendication 5, dans laquelle une aire de section transversale de ventilation d'un intervalle formé par un côté diamètre extérieur de la plaque principale (10a) et un côté diamètre intérieur de la plaque de séparation de poussière (15) est supérieure à une aire de section transversale de ventilation de l'orifice de sortie de poussière (12).

**7.** Machine électrique rotative selon l'une quelconque des revendications 1 à 6, dans laquelle le nombre d'ailettes et le nombre d'orifices d'entrée d'air (11) dans l'ailette (10b) sont une combinaison de nombres qui ne sont pas divisés les uns par les autres.

# FIG. 1

# FIG. 2

10

# FIG. 3

10b — 10d — 10c

10

10a

10e

_10_

# FIG. 4

11

11 — 11

7

11

12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001095204 A
- WO 2015118660 A
- US 2014312723 A1
- FR 716885 A
- FR 2863787 A1
- EP 1137152 A2